# EUROPEAN PATENT APPLICATION

(11) **EP 4 535 516 A1**
(43) Date of publication of application: **09.04.2025**
(21) Application number: 23811919.2
(22) Date of filing: 26.05.2023
(51) Int. Cl.: H01M 10/658, F16L 59/04, H01M 10/625, H01M 10/651, H01M 10/6555

(54) **HEAT TRANSFER SUPPRESSION SHEET AND BATTERY PACK**

(30) Priority: 27.05.2022 JP 2022086811
(71) Applicant: IBIDEN CO., LTD., Ogaki-shi, Gifu 503-8604 (JP)
(72) Inventor: KUMANO, Keiji, Ibi-gun, Gifu 501-0695 (JP); IDO, Takahiko, Ibi-gun, Gifu 501-0695 (JP)
(74) Representative: Hoffmann Eitle
(86) International application number: PCT/JP2023/019815
(87) International publication number: WO 2023/229047

(57) **Abstract**

Provided are: a heat transfer suppression sheet that has such a strength that the shape thereof can be maintained even in a case where a compressive stress is applied to the heat transfer suppression sheet, and that also has a high holding capacity with respect to inorganic particles, thereby being capable of maintaining excellent heat insulating performance; and a battery pack having the heat transfer suppression sheet. A heat transfer suppression sheet (10) contains inorganic particles (4) and organic fibers (1). At least a part of the organic fiber (1) has a branched structure containing a base portion (2) and branch portions (3) extending from the base portion (2) in, for example, four directions of a direction D1, a direction D2, a direction D3, and a direction D4.

## Description

### TECHNICAL FIELD

The present invention relates to a heat transfer suppression sheet and a battery pack including the heat transfer suppression sheet.

### BACKGROUND ART

In recent years, the development of electric vehicles or hybrid vehicles which are driven by an electric motor has been actively promoted from the viewpoint of environmental protection. A battery pack in which a plurality of battery cells are connected in series or in parallel is mounted in the electric vehicle, the hybrid vehicle, or the like, where the battery pack is for serving as a power source for an electric motor for driving.

In addition, a lithium ion secondary battery that can have a high capacity and a high output as compared with a lead storage battery, a nickel hydrogen battery, or the like is mainly used for the battery cell. In addition, in a case where a certain battery cell causes such thermal runaway that the temperature of the battery cell rapidly rises and even thereafter, heat generation continues due to internal short-circuiting, overcharging, or the like of the battery, there is a concern that the heat from the battery cell that has caused thermal runaway propagates to adjacent other battery cells, which causes thermal runaway of the other battery cells.

As a method of suppressing the propagation of heat from the battery cell that has caused such thermal runaway as described above, a method of interposing a heat insulating sheet between battery cells is generally carried out.

For example, Patent Literature 1 discloses a heat insulating sheet for a battery pack, which includes first particles composed of silica nanoparticles and second particles composed of a metal oxide, where a content of the first particles is limited. In addition, Patent Literature 1 describes that the heat insulating sheet may contain a bonding material composed of at least one selected from a fiber, a binder, and a heat resistant resin.

In addition, Patent Literature 1 describes that a dry type silica or a wet type silica can be used as the first particles, and the heat insulating sheet can be manufactured by a dry type molding method or a wet type sheet forming method.

### CITATION LIST

### PATENT LITERATURE

Patent Literature 1: JP2021-34278A

### SUMMARY OF INVENTION

### TECHNICAL PROBLEM

By the way, examples of the binder in a case of manufacturing a heat insulating sheet (heat transfer suppression sheet) include a hygrothermal adhesive binder fiber. However, in order to exhibit adhesiveness of the hygrothermal adhesive binder fiber, it is necessary to bring the hygrothermal adhesive binder fiber into a wet state during manufacturing. As a result, in a case where the hygrothermal adhesive binder fiber is used, the heat insulating sheet needs to be manufactured according to a wet type sheet forming method.

However, in a case where a dry type silica or a silica aerogel, which has a low thermal conductivity, is used for the intended purpose of improving much further the heat insulating performance, there is a problem in that the heat insulating sheet cannot be manufactured according to the wet type sheet forming method. This is because, in a case where a material containing a dry type silica is molded into a sheet shape by the wet type sheet forming method, the dry type silica is aggregated by water, and the thermal conductivity is increased. In addition, in general, it is difficult to disperse a silica aerogel in water. Therefore, in a case where a material containing a silica aerogel is molded according to the wet type sheet forming method, it is not possible to obtain a heat insulating sheet in which the material is uniformly dispersed, which causes a decrease in quality.

On the other hand, in a case where a heat insulating sheet is manufactured according to a dry type molding method by using inorganic particles such as a dry type silica or a silica aerogel, the inorganic particles may fall off (hereinafter, also referred to as powder falling) due to pressure, impact, or the like. In particular, in a case of a battery pack in recent years, the capacity of the battery cell has been improved much further, and thus the expansion rate during charging and discharging has increased. As a result, in a case where a heat insulating sheet is disposed between the battery cells of the battery pack, the heat insulating sheet is compressed in a case where the strength of the entire heat insulating sheet is low, due to the expansion of the battery cell during charging and discharging and the like of the battery cell, and powder falling occurs, which deteriorates the heat insulating performance. As a result, in a case where the battery cell undergoes thermal runaway and then the temperature increases, the effect of the heat insulating sheet cannot be exhibited, which may cause a thermal chain. From these facts, there is a demand for a study on a heat insulating sheet that has a high strength capable of maintaining a shape and can suppress powder falling, and that can also maintain excellent heat insulating properties, and a manufacturing method thereof.

The heat insulating sheet described in Patent Literature 1 is such a heat insulating sheet that maintains excellent heat insulating properties even in a case where the compressive stress is increased. However, there is a demand for further improvement in terms of heat insulating properties, strength, and performance of suppressing powder falling.

The present invention has been made in consideration of the above-described problems, and an object of the present invention is to provide a heat transfer suppression sheet that has such a strength that the shape thereof can be maintained even in a case where a compressive stress is applied to the heat transfer suppression sheet, and that also has a high holding capacity with respect to inorganic particles, thereby being capable of maintaining excellent heat insulating performance; and a battery pack having the heat transfer suppression sheet.

### SOLUTION TO PROBLEM

The above-described object of the present invention is achieved by the following configuration of [1] pertaining to a heat transfer suppression sheet.
[1] A heat transfer suppression sheet including:
   inorganic particles; and
   an organic fiber,
   in which at least a part of the organic fiber has a branched structure containing a base portion and branch portions extending from the base portion in at least three directions.
   In addition, the preferred embodiments pertaining to the heat transfer suppression sheet according to the present invention relate to the following [2] to [14].
[2] The heat transfer suppression sheet according to [1], in which the base portion is a fused portion in which a plurality of the organic fibers are fused with each other.
[3] The heat transfer suppression sheet according to [1] or [2], in which the heat transfer suppression sheet has a plurality of empty holes.
[4] The heat transfer suppression sheet according to any one of [1] to [3], in which the heat transfer suppression sheet has a fiber bundle that is obtained by fusing at least a part of a plurality of the organic fibers to each other.
[5] The heat transfer suppression sheet according to [4], in which the heat transfer suppression sheet has a void portion between a plurality of the organic fibers constituting the fiber bundle.
[6] The heat transfer suppression sheet according to any one of [1] to [5], in which the heat transfer suppression sheet has a fiber layer that is obtained by fusing at least a part of a plurality of the organic fibers to each other on at least a part of a first surface and a second surface, each of which is orthogonal to a thickness direction of the heat transfer suppression sheet.
[7] The heat transfer suppression sheet according to [6], in which between the fiber layer and a base layer containing the inorganic particles and the organic fibers, the heat transfer suppression sheet has a composite layer containing a plurality of the organic fibers, at least a part of which are fused to each other, and the inorganic particles fused to the organic fibers.
[8] The heat transfer suppression sheet according to any one of [1] to [7], in which at least a part of the inorganic particles are fused to the organic fiber.
[9] The heat transfer suppression sheet according to any one of [2] to [8], in which the organic fiber has a core portion composed of a first organic material and a sheath portion composed of a second organic material and covering at least a part of a surface of the core portion, a melting point of the second organic material is lower than a melting point of the first organic material, and the fused portion contains the second organic material.
[10] The heat transfer suppression sheet according to [9], in which the melting point of the second organic material is lower than the melting point of the first organic material by 60°C or more.
[11] The heat transfer suppression sheet according to [9] or [10], in which the first organic material is at least one selected from polyethylene terephthalate, polypropylene, and nylon, and the second organic material is at least one selected from polyethylene terephthalate, polyethylene, polypropylene, and nylon.
[12] The heat transfer suppression sheet according to any one of [1] to [11], in which the inorganic particle is at least one kind of inorganic material particle selected from an oxide particle, a carbide particle, a nitride particle, and an inorganic hydrate particle.
[13] The heat transfer suppression sheet according to [12], in which the inorganic particles include at least one kind of particle selected from a dry type silica particle and a silica aerogel.
[14] The heat transfer suppression sheet according to [13], in which the inorganic particles further include at least one kind of particle selected from titania, zircon, zirconia, silicon carbide, zinc oxide, and alumina.
   In addition, the above-described object of the present invention is achieved by the following configuration of [15] pertaining to a battery pack
[15] A battery pack including:
   a plurality of battery cells; and
   the heat transfer suppression sheet according to any one of [1] to [14],
   in which the plurality of battery cells are connected in series or in parallel.

### ADVANTAGEOUS EFFECTS OF INVENTION

The heat transfer suppression sheet according to the embodiment of the present invention contains an organic fiber having a branched structure that contains a base portion and branch portions extending from the base portion in at least three directions, the organic fiber having the branched structure serves as a skeleton, and the base portion firmly supports the skeleton. Therefore, an excellent strength can be obtained. In addition, the heat transfer suppression sheet according to the embodiment of the present invention has a firm skeleton and also has a plurality of branch portions. Therefore, it is possible to suppress powder falling, and it is also possible to prevent a decrease in the heat insulating effect due to the compressive deformation of the heat transfer suppression.

According to the battery pack according to the present invention, the heat transfer suppression sheet having the effect of maintaining a high strength and heat insulating performance as described above is provided. Therefore, it is possible to suppress the thermal runaway of the battery cell in the battery pack or the expansion of flame to the outside of the battery case.

### BRIEF DESCRIPTION OF DRAWINGS

Fig. 1 is a photographic image substituting for a drawing, which shows a structure of a heat transfer suppression sheet according to an embodiment of the present invention.
Fig. 2 is a photographic image substituting for a drawing, which shows an enlarged structure of the heat transfer suppression sheet according to the embodiment of the present invention.
Fig. 3 is a photographic image substituting for a drawing, which shows a cross section of the heat transfer suppression sheet according to the embodiment of the present invention.
Fig. 4 is a cross-sectional view schematically showing a battery pack having a heat transfer suppression sheet according to the embodiment of the present invention.

### DESCRIPTION OF EMBODIMENTS

The inventors of the present invention carried out intensive studies on a heat transfer suppression sheet that can solve the above-described problems.

As a result, it was found that in a case where a heat transfer suppression sheet is allowed to contain an organic fiber having a branched structure that contains a base portion and branch portions extending from the base portion in at least three directions, the organic fiber having the branched structure serves as a skeleton, the skeleton can be firmly supported by the base portion, and as a result, the strength of the heat transfer suppression sheet can be improved, which makes it possible to maintain high heat insulating performance.

Hereinafter, a heat transfer suppression sheet according to an embodiment of the present invention, a manufacturing method therefor, and a battery pack will be described in detail. It is noted that the present invention is not limited to the embodiments described below, and the present invention can be implemented with any modifications without departing from the scope of the present invention.

### [Heat transfer suppression sheet]

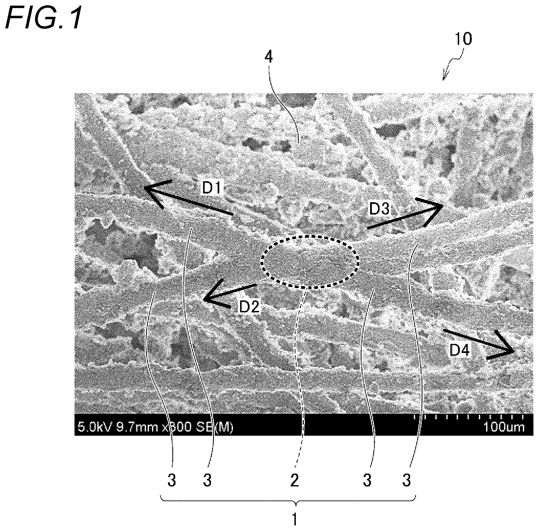

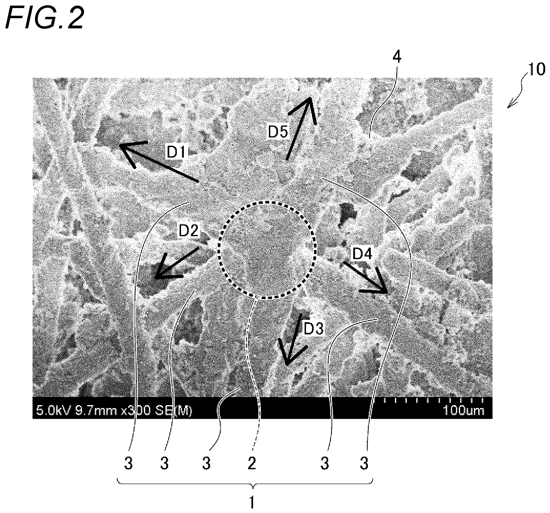

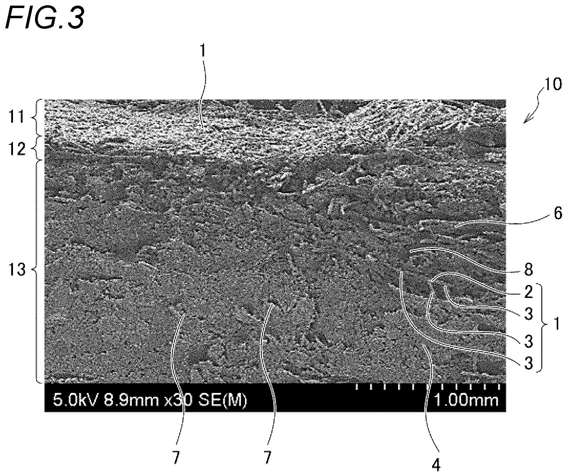

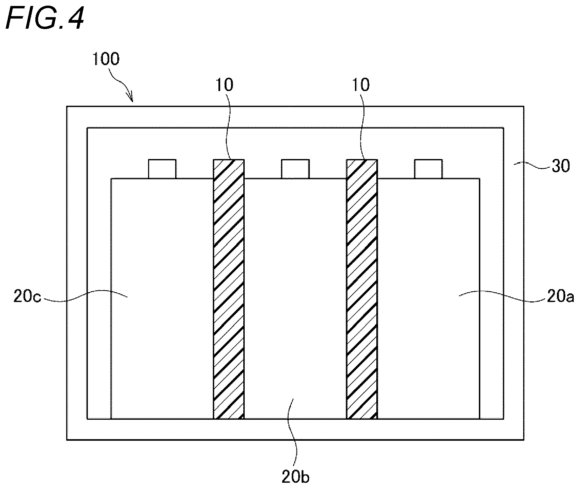

Fig. 1 is a photographic image substituting for a drawing, which shows a structure of a heat transfer suppression sheet according to an embodiment of the present invention, and Fig. 2 is a photographic image substituting for a drawing, which shows another structure example of the heat transfer suppression sheet according to the embodiment of the present invention. Fig. 3 is a photographic image substituting for a drawing, which shows a cross section of the heat transfer suppression sheet according to the embodiment of the present invention. In addition, Fig. 4 is a cross-sectional view schematically showing a battery pack having a heat transfer suppression sheet according to the embodiment of the present invention. It is noted that in Fig. 2, the same elements as those in Fig. 1 are denoted by the same reference numerals.

As shown in Fig. 1, a heat transfer suppression sheet 10 according to the present embodiment contains inorganic particles 4 and organic fibers 1. In addition, at least a part of the organic fiber 1 has a branched structure containing a base portion 2 and a branch portion 3 extending from the base portion 2. In the present embodiment, the branch portion 3 extends from the base portion 2 in four directions of a direction D1, a direction D2, a direction D3, and a direction D4. In addition, a skeleton is formed from the base portion 2 and a plurality of the branch portions 3.

In addition, the heat transfer suppression sheet 10 shown in Fig. 2 also contains the organic fiber 1 that has a branched structure containing a base portion 2 and a branch portion 3 extending from the base portion 2. It is noted that the organic fiber 1 shown in Fig. 2 has a base portion 2 and branch portions 3 extending from the base portion 2 in five directions of a direction D1, a direction D2, a direction D3, a direction D4, and a direction D5, and the base portion 2 is thick as compared with the plurality of branch portions 3.

Further, as shown in Fig. 1 and Fig. 2, in the present embodiment, the inorganic particles 4 are fused to the surface of the organic fiber 1, and thus, the surface of the organic fiber 1 is covered with the inorganic particles 4.

In addition, as shown in the cross-sectional view of Fig. 3, a plurality of empty holes 7 are formed in the heat transfer suppression sheet 10. Further, in the heat transfer suppression sheet 10, a fiber bundle 6 is formed by fusing at least a part of the plurality of organic fibers 1 to each other, and void portions 8 are formed between the plurality of organic fibers 1 constituting the fiber bundle 6. It is noted that even in the heat transfer suppression sheet 10 shown in Fig. 3, it is possible to confirm the organic fiber 1 that has a branched structure containing the base portion 2 and the branch portions extending from the base portion 2 in three directions.

Further, a fiber layer 11 is formed on at least a part of a first surface and a second surface of the heat transfer suppression sheet 10, each of which is orthogonal to a thickness direction. The fiber layer 11 is obtained by fusing at least a part of the plurality of organic fibers 1 to each other to form the fiber layer 11 in a layer shape on the surface (the first surface and the second surface) of the heat transfer suppression sheet 10. In addition, a composite layer 12 is formed between the fiber layer 11 and a base layer 13 containing the inorganic particles 4 and the organic fiber 1. The composite layer 12 is a layer in which a part of the fiber layers 11 and a part of the inorganic particles 4 are mixed. Specifically, the composite layer 12 is a region that includes a plurality of organic fibers 1 fused to each other and inorganic particles 4 fused to the organic fibers 1.

It is noted that the fiber bundle 6 is formed by entangling 10 or more organic fibers 1 with each other and fusing a part of the organic fibers 1 to each other, and the fiber bundle 6 is disposed in any direction in the heat transfer suppression sheet 10. On the other hand, the fiber layer 11 is a layer formed by aggregating 10 or more organic fibers 1 on the surface of the heat transfer suppression sheet 10, and the fiber layer 11 extends, for example, in a stripe shape in a direction substantially parallel to the surface.

As a specific use form of the heat transfer suppression sheet 10, the heat transfer suppression sheet 10 can be used to be interposed between a plurality of battery cells 20a, 20b, and 20c as shown in Fig. 4. In addition, the plurality of battery cells 20a, 20b, and 20c are housed in a battery case 30 in a state (the state of being connected is not shown) in which the plurality of battery cells 20a, 20b, and 20c are connected in series or in parallel, whereby a battery pack 100 is constituted. It is noted that although, for example, a lithium ion secondary battery is suitably used for the battery cells 20a, 20b, and 20c, the present invention is not particularly limited thereto, and other secondary batteries can also be applied.

In the heat transfer suppression sheet 10 according to the present embodiment which is configured as described above, the organic fiber 1 has a branched structure containing the base portion 2 and the branch portion 3, and thus the organic fiber 1 can serve as a skeleton to maintain the shape of the heat transfer suppression sheet 10. In the present embodiment, the base portion 2 is composed of a fused portion in which the organic fibers 1 are fused with each other. Specifically, the base portion 2 is a portion in which a part of the plurality of organic fibers 1 are in contact with each other, are melted, and then are solidified, and thus the base portion 2 is thicker than the branch portion 3. As a result, the entire skeleton can be firmly supported by the base portion 2, and thus the strength of the heat transfer suppression sheet 10 can be significantly improved.

Further, in the present embodiment, the plurality of branch portions 3 extend from the base portion 2. Therefore, the inorganic particles 4 can be held by the plurality of branch portions 3, and a high effect of suppressing powder falling can be obtained by a synergistic effect with the effect of improving the sheet strength by skeleton formation. As a result, the shape thereof can be maintained, for example, even in a case where a part of the battery cells 20a, 20b, and 20c expands during charging and discharging, and thus a compressive stress or an impact is applied to the heat transfer suppression sheet 10. In addition, it is possible to suppress the falling off of the inorganic particles 4 (powder falling), and it is also possible to prevent a decrease in the heat insulating effect due to the compressive deformation of the heat transfer suppression sheet 10.

In the present embodiment, in terms of the mechanism that can suppress the falling off of the inorganic particles 4 from the sheet surface, it is considered to be due to the fact that, in addition to the effect of holding the inorganic particles 4 by the branch portions 3, the organic fiber 1 forms a three-dimensional and firm skeleton, the shape of the heat transfer suppression sheet 10 is maintained, and the deformation or compression of the heat transfer suppression sheet 10 is suppressed. In addition, as shown in Fig. 3, in a case where the fiber layer 11 in which the plurality of organic fibers 1 are fused to each other is formed on the surface of the heat transfer suppression sheet 10, the fiber layer 11 can absorb an impact applied to the heat transfer suppression sheet 10. As a result, the presence of the fiber layer 11 makes it possible to obtain an effect of holding the inorganic particles 4 much further. Furthermore, in a case where the inorganic particles 4 are fused to the surface of the organic fiber 1, the organic fiber 1 has an apparently thick fiber diameter, and thus the strength is higher than the strength of only the organic fiber 1, and a high holding effect of the inorganic particles 4 can be also obtained.

It is noted that in Fig. 1 and Fig. 2, although the inorganic particles 4 are fused to the entire outer peripheral surface of the organic fiber 1, the inorganic particles 4 does not need to be in a state of completely covering the outer peripheral surface of the organic fiber 1 in the present invention, and there may be a region in which the inorganic particles 4 are not partially fused. In the heat transfer suppression sheet 10 according to the present embodiment, a binder fiber having a core-sheath structure, which will be described later, can be used as the material of the organic fiber 1; however, in a case where the sheath portion is peeled off in the manufacturing step, the core portion may be partially exposed. Even in such a case, the effect of holding the inorganic particles 4 can be sufficiently obtained.

In addition, since the heat transfer suppression sheet 10 according to the present embodiment includes the organic fiber 1 having high flexibility, it is possible to increase the flexibility of the heat transfer suppression sheet 10, and it is also possible to obtain an effect of improving the sheet strength since the organic fibers 1 are easily entangled with each other.

Further, the heat transfer suppression sheet 10 according to the present embodiment has a plurality of empty holes 7 and also has void portions 8 between the plurality of organic fibers 1 constituting the fiber bundle 6, and thus the heat insulating performance can be improved by the effect of air heat insulation. In addition, since the organic fiber 1 is not completely restrained due to the presence of the void portion 8, the flexibility and the strength of the heat transfer suppression sheet 10 can be improved much further. The void portion 8 does not need to be formed in the entire region between the plurality of organic fibers 1, and the effect of suppressing heat transfer can be obtained as long as the void portion 8 is formed in at least a part between the organic fibers 1.

Furthermore, since the heat transfer suppression sheet 10 contains the fiber bundle 6 and the fiber layer 11, it is possible to obtain a much higher sheet strength as compared with a case where the organic fibers 1 are dispersed and disposed. In addition, the fiber layer 11 is not simply disposed on the base layer 13, but the composite layer 12 in which a part of the fiber layers 11 and a part of the inorganic particles 4 are mixed is provided between the fiber layer 11 and the base layer 13. Therefore, the fiber layer 11 is reliably restrained on the surface of the heat transfer suppression sheet 10. As a result, it is possible to obtain the heat transfer suppression sheet 10 having a high strength.

Hereinafter, the materials constituting the heat transfer suppression sheet according to the present embodiment will be described in detail.

### <Organic fiber>

The organic fiber 1 has an effect of imparting flexibility to the heat transfer suppression sheet 10, and also has an effect of increasing the strength of the heat transfer suppression sheet 10 since the organic fiber having a branched structure forms a skeleton as described above. In addition, in a case where the inorganic particles 4 and the other organic fibers 1 are fused to the surface of the organic fiber 1, the effect of improving the strength of the sheet and the effect of maintaining the shape can be improved much further. As a material of the organic fiber 1 in the heat transfer suppression sheet 10, a single-component organic fiber can also be used. However, a binder fiber having a core-sheath structure is preferably used. The binder fiber having a core-sheath structure has a core portion extending in the longitudinal direction of the fiber and a sheath portion formed to cover the outer peripheral surface of the core portion. In addition, the core portion is composed of a first organic material, the sheath portion is composed of a second organic material, and a melting point of the first organic material is higher than a melting point of the second organic material.

Further, in the present embodiment, at least a part of the organic fiber 1 has a branched structure containing the base portion 2 and the branch portions 3 extending from the base portion 2 in at least three directions. The branched structure can be confirmed in a cross-sectional photographic image shown in Fig. 3 or the like. However, examples of a method of more easily confirming the branched structure include a method of observing a cross section that is obtained by tearing the heat transfer suppression sheet 10 in a plane direction orthogonal to the thickness direction of the heat transfer suppression sheet 10. In this way, by observing the cross section, it is possible to easily confirm the organic fiber 1 that has a branched structure containing the base portion 2 and the branch portions extending from the base portion 2 in at least three directions. The base portion 2 and the branch portion 3 will be described in detail below.

### (base portion (fused portion))

The fused portion is formed by temporarily melting by heating and then cooling a sheath portion of a binder fiber and then cooling the sheath portion in a portion where a plurality of binder fibers are in contact with each other in a case where a binder fiber having a core-sheath structure is used as the organic fiber 1. In a case where a binder fiber having a core-sheath structure is used as the organic fiber 1, the fused portion contains the second organic material constituting the sheath portion.

In this way, in a case where the sheath portion in the region in which a plurality of binder fibers are in contact with each other is melted by heating in the manufacturing step for the heat transfer suppression sheet 10, the amount of the melted sheath portion (second organic material) is larger than the amount in a case where the sheath portion of one binder fiber is melted, and a thick fused portion (base portion 2) is formed after cooling. As a result, the skeleton is firmly supported by the base portion 2.

### (Branch portion)

The branch portion 3 extends from the base portion 2 in at least three directions and has an effect of holding the inorganic particles 4. In addition, since the skeleton is formed from the base portion 2 and the branch portion 3, the strength of the heat transfer suppression sheet 10 can also be improved. This makes it possible to obtain a high effect of suppressing powder falling.

In a case where a binder fiber having a core-sheath structure is used as the organic fiber 1, the branch portion 3 is a part of the binder fiber having a core-sheath structure, and a core portion composed of the first organic material and a sheath portion composed of the second organic material are provided.

As long as the branch portions 3 extending from the base portion 2 extend in at least three directions, a skeleton formed by the organic fiber 1 can be formed. In addition, it is preferable that the plurality of branch portions 3 extend in three-dimensional directions different from each other, which makes it possible to form a three-dimensional and strong skeleton.

### (First organic material)

In the binder fiber having a core-sheath structure that can be used in the present embodiment, the first organic material constituting the core portion is not particularly limited as long as it has a melting point higher than the melting point of the sheath portion present on the outer peripheral surface of the core portion, that is, the melting point of the second organic material. Examples of the first organic material include at least one selected from polyethylene terephthalate, polypropylene, and nylon.

### (Second organic material)

The second organic material is not particularly limited as long as it has a melting point lower than a melting point of the first organic material constituting the organic fiber 1. Examples of the second organic material include at least one selected from polyethylene terephthalate, polyethylene, polypropylene, and nylon.

It is noted that the melting point of the second organic material is preferably 90°C or higher and more preferably 100°C or higher. In addition, the melting point of the second organic material is preferably 150°C or lower and more preferably 130°C or lower.

### (Content of organic fiber)

In the present embodiment, in a case where the content of the organic fiber 1 in the heat transfer suppression sheet 10 is appropriately controlled, the effect of reinforcing the skeleton can be sufficiently obtained.

The content of the organic fiber 1 is preferably 5% by mass or more and more preferably 10% by mass or more with respect to the total mass of the heat transfer suppression sheet 10. In addition, in a case where the content of the organic fiber 1 is too large, the content of the inorganic particles 4 is relatively reduced. Therefore, in order to obtain the desired heat insulating performance, the content of the organic fiber is preferably 25% by mass or less and more preferably 20% by mass or less with respect to the total mass of the heat transfer suppression sheet 10.

### (Fiber length of organic fiber)

The fiber length of the organic fiber 1 is not particularly limited; however, from the viewpoint of ensuring moldability and processability, the average fiber length of the organic fiber is preferably 10 mm or less.

On the other hand, from the viewpoint of causing the organic fiber 1 to function as a skeleton and ensuring the compressive strength of the heat transfer suppression sheet, the average fiber length of the organic fiber 1 is preferably 0.5 mm or more.

It is noted that in a case of the organic fiber 1 having a branched structure containing a base portion 2 and a branch portion 3, the average length of the branch portions 3 is calculated by dividing the total length of all the branch portions 3 by the number of the branch portions 3, and a value two times the average length is defined as the fiber length.

### <Inorganic particle>

As the inorganic particles, a single kind of inorganic particles may be used, or two or more kinds of inorganic particles may be used in combination. Regarding the kind of the inorganic particles, from the viewpoint of the effect of suppressing heat transfer, it is preferable to use a particle composed of at least one inorganic material, which is selected from an oxide particle, a carbide particle, a nitride particle, and an inorganic hydrate particle, and it is more preferable to use an oxide particle. In addition, the shape thereof is not particularly limited; however, it is preferable to include at least one selected from a nanoparticle, a hollow particle, and a porous particle, and specifically, it is also possible to use an inorganic balloon such as a silica nanoparticle, a metal oxide particle, a microporous particle, or a hollow silica particle, a particle composed of a thermally expandable inorganic material, a particle composed of a water-containing porous body, or the like.

In a case where the average secondary particle diameter of the inorganic particles is 0.01 µm or more, the inorganic particles are easily available, and an increase in manufacturing cost can be suppressed. In addition, in a case where the thickness thereof is 200 µm or less, a desired heat insulating effect can be obtained. As a result, the average secondary particle diameter of the inorganic particles is preferably 0.01 µm or more and 200 µm or less, and more preferably 0.05 µm or more and 100 µm or less.

It is noted that in a case where two or more kinds of inorganic particles having an effect of suppressing heat transfers different from each other are used in combination, the heat generating body can be cooled in multiple stages, and the endothermic action can be exhibited in a wider temperature range. Specifically, it is preferable to use a particle having a large diameter and a particle having a small diameter in combination. For example, in a case where a nanoparticle is used as one kind of inorganic particle, it is preferable that the other kind of inorganic particle includes an inorganic particle composed of a metal oxide. Hereinafter, the inorganic particles will be described in more detail by defining an inorganic particle having a small diameter as the first inorganic particle and an inorganic particle having a large diameter as the second inorganic particle.

### <First inorganic particle>

### (Oxide particle)

The oxide particle has a high refractive index and has a strong effect of subjecting light to irregular reflection. Therefore, in a case where the oxide particle is used as the first inorganic particle, it is possible to suppress radiative heat transfer, particularly in a high temperature range in abnormal heat generation or the like. As the oxide particle, at least one kind of particle selected from silica, titania, zirconia, zircon, barium titanate, zinc oxide, and alumina can be used. That is, among the above-described oxide particles that can be used as the inorganic particles, one kind of oxide particle may be used, or two or more kinds of oxide particles may be used. In particular, silica is a component having high heat insulating properties, and titania is a component having a high refractive index as compared with other metal oxides, whereby the effect of subjecting light to irregular reflection and blocking radiant heat is high in a high temperature range of 500°C or higher. Therefore, it is most preferable to use silica and titania as the oxide particle.

### (Average primary particle diameter of oxide particles: 0.001 µm or more and 50 µm or less)

Since the particle diameter of the oxide particles may affect the effect of reflecting the radiant heat, it is possible to obtain much higher heat insulating properties in a case where the average primary particle diameter is limited to a predetermined range.

That is, in a case where the average primary particle diameter of the oxide particles is 0.001 µm or more, the average primary particle diameter is sufficiently larger than the wavelength of light contributing to heating, and thus the light is efficiently subjected to irregular reflection. Therefore, the radiative heat transfer of heat in the heat transfer suppression sheet is suppressed in a high temperature range of 500°C or higher, and the heat insulating properties can be improved much further.

On the other hand, in a case where the average primary particle diameter of the oxide particles is 50 µm or less, the number of contact points between particles does not increase even in a case where the particles are compressed, and it is difficult to form a path for conductive heat transfer. Therefore, it is possible to reduce the influence on the heat insulating properties in a normal temperature range in which conductive heat transfer is dominant.

It is noted that in the present invention, the average primary particle diameter can be determined by observing particles with a microscope, comparing the particles with a standard scale, and averaging any 10 particles.

### (Nanoparticle)

In the present invention, the nanoparticle indicates a particle of a nanometer order having an average primary particle diameter of less than 1 µm, which is spherical or close to spherical. The nanoparticle suppresses conductive heat transfer due to having a low density, and the voids are further finely dispersed in a case where the nanoparticle is used as the first inorganic particle. Therefore, it is possible to obtain excellent heat insulating properties that suppress convective heat transfer. Therefore, it is preferable to use the nanoparticles from the viewpoint that the transfer of heat between the adjacent nanoparticles can be suppressed in a case where the battery is used in a normal temperature range.

Further, in a case where nanoparticles having a small average primary particle diameter are used as the oxide particles, it is possible to suppress the conductive heat transfer of the heat transfer suppression sheet even in a case where the heat transfer suppression sheet is compressed due to expansion associated with thermal runaway of the battery cell and the density inside the heat transfer suppression sheet is increased. It is considered that this is because the nanoparticles make it easy to form small voids between particles by electrostatic repulsion, and the bulk density is low, whereby the particles are filled to have cushioning properties.

It is noted that in the present invention, in a case where nanoparticles are used as the first inorganic particles, the material thereof is not particularly limited as long as it is in accordance with the definition of the nanoparticles. For example, since the silica nanoparticles have a small contact point between particles in addition to being a material having high heat insulating properties, the amount of heat transferred by the silica nanoparticles is small as compared with a case where silica particles having a large particle diameter are used. In addition, since the silica nanoparticles generally available have a bulk density of about 0.1 (g/cm³), the size (area) or the number of the contact points between the silica nanoparticles does not significantly increase, and thus the heat insulating properties can be maintained, for example, even in a case where the battery cells disposed on both sides of the heat transfer suppression sheet are thermally expanded and a large compressive stress is applied to the heat transfer suppression sheet. As a result, it is preferable to use silica nanoparticles as the nanoparticles. Examples of the silica nanoparticles a wet type silica, a dry type silica, and an aerogel. However, the silica nanoparticles particularly suitable for the present embodiment will be described below.

In general, in the case of the wet type silica, particles are aggregated, whereas in the case of the dry type silica, particles can be dispersed. In a temperature range of 300°C or lower, conductive heat transfer is dominant in the transfer of heat. Therefore, the dry type silica in which particles can be dispersed makes it possible to obtain excellent heat insulating performance as compared with the wet type silica.

It is noted that it is preferable that the heat transfer suppression sheet according to the present embodiment is manufactured by a manufacturing method in which a mixture including a material is processed into a sheet shape by a dry type method. As a result, it is preferable to use, as the inorganic particles, a dry type silica having low thermal conductivity, a silica aerogel, or the like.

### (Average primary particle diameter of nanoparticles: 1 nm or more and 100 nm or less)

It is possible to obtain much higher heat insulating properties in a case where the average primary particle diameter of the nanoparticles is limited to a predetermined range.

That is, in a case where the average primary particle diameter of the nanoparticles is 1 nm or more and 100 nm or less, it is possible to suppress the convective heat transfer and the conductive heat transfer of heat in the heat transfer suppression sheet, particularly in a temperature range lower than 500°C, and thus it is possible to improve much further the heat insulating properties. In addition, even in a case where the compressive stress is applied, the voids remaining between the nanoparticles and the contact points between the particles suppress the conductive heat transfer, and thus the heat transfer suppression sheet can maintain heat insulating properties.

It is noted that the average primary particle diameter of the nanoparticles is more preferably 2 nm or more and still more preferably 3 nm or more. On the other hand, the average primary particle diameter of the nanoparticles is more preferably 50 nm or less and still more preferably 10 nm or less.

### (Inorganic hydrated particle)

In a case where inorganic hydrate particles receive heat from a heat generating body and the temperature reaches or exceeds the thermal decomposition initiation temperature, the inorganic hydrate particles are thermally decomposed to release the water of crystallization contained in the inorganic hydrate particles themselves, thereby exhibiting a so-called "endothermic action" of lowering the temperature of the heat generating body and the periphery thereof. In addition, after the release of the water of crystallization, the porous body is formed, and the heat insulating action is exhibited by innumerable air holes.

Specific examples of the inorganic hydrate include aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), and gallium hydroxide (Ga(OH)₃).

For example, aluminum hydroxide has about 35% of water of crystallization, and it thermally decomposes to release the water of crystallization, thereby exhibiting an endothermic action, as shown in the following formula. Then, after the release of the water of crystallization, alumina (Al₂O₃), which is a porous body, is formed and functions as a heat insulating material.

2Al(OH)₃ → Al₂O₃ + 3H₂O

It is noted that, as will be described later, although the heat transfer suppression sheet 10 according to the present embodiment is suitable for being interposed, for example, between battery cells, the temperature rapidly rises to a temperature higher than 200°C, and the temperature continues to rise to around 700°C in a battery cell that has undergone thermal runaway. As a result, the inorganic particles preferably are composed of an inorganic hydrate having a thermal decomposition initiation temperature of 200°C or higher.

Regarding thermal decomposition initiation temperature of each of the inorganic hydrates described above, it is about 200°C for aluminum hydroxide, about 330°C for magnesium hydroxide, about 580°C for calcium hydroxide, about 200°C for zinc hydroxide, about 350°C for iron hydroxide, about 300°C for manganese hydroxide, about 300°C for zirconium hydroxide, and about 300°C for gallium hydroxide, and all of the thermal decomposition initiation temperatures are almost overlap with the temperature range of the rapid temperature rise of the battery cell that has undergone thermal runaway, which makes it possible to effectively suppress the temperature rise. Therefore, it can be said that the inorganic hydrates are preferable.

### (Average secondary particle diameter of inorganic hydrate particles: 0.01 µm or more and 200 µm or less)

In addition, in a case where inorganic hydrate particles are used as the first inorganic particles, the first inorganic particles (inorganic hydrate) adjacent to the center of the heat transfer suppression sheet 10 require a certain amount of time to reach the thermal decomposition temperature thereof in a case where the average particle diameter thereof is too large. Therefore, the first inorganic particles adjacent to the center of the sheet may not be thermally decomposed completely. Therefore, the average secondary particle diameter of the inorganic hydrate particles is preferably 0.01 µm to 200 µm and more preferably 0.05 µm to 100 µm.

### (Particles composed of thermally expandable inorganic material)

Examples of the thermally expandable inorganic material include vermiculite, bentonite, mica, and perlite.

### (Particles composed of water-containing porous body)

Specific examples of the water-containing porous body include zeolite, kaolinite, montmorillonite, acidic clay, diatomaceous earth, a wet type silica, a dry type silica, an aerogel, mica, and vermiculite.

### (Inorganic balloon)

The heat insulating material that is used in the present invention may include an inorganic balloon as the first inorganic particle.

In a case where the inorganic balloon is included, it is possible to suppress the convective heat transfer or the conductive heat transfer of heat in the heat insulating material in a temperature range of lower than 500°C, and it is possible to improve much further the heat insulating properties of the heat insulating material.

As the inorganic balloon, at least one selected from a siliceous balloon, a silica balloon, a fly ash balloon, a barite balloon, and a glass balloon can be used.

### (Content of inorganic balloon: 60% by mass or less with respect to total mass of heat insulating material)

The content of the inorganic balloon is preferably 60% by mass or less with respect to the total mass of the heat insulating material.

### (Average particle diameter of inorganic balloon: 1 µm or more and 100 µm or less)

The average particle diameter of the inorganic balloon is preferably 1 µm or more and 100 µm or less.

### <Second inorganic particle>

In a case where the heat transfer suppression sheet contains two kinds of inorganic particles, the second inorganic particles are not particularly limited as long as the material, particle diameter, and the like are different from those of the first inorganic particles. It is also possible to use, as the second inorganic particles, an inorganic balloon such as an oxide particle, a carbide particle, a nitride particle, an inorganic hydrate particle, a silica nanoparticle, a metal oxide particle, a microporous particle, or a hollow silica particle, a particle composed of a thermally expandable inorganic material, a particle composed of a water-containing porous body, or the like, and the details of these are as described above.

It is noted that the nanoparticles have extremely low conductive heat transfer and also make it possible to maintain excellent heat insulating properties even in a case where compressive stress is applied to the heat transfer suppression sheet. In addition, metal oxide particles such as titania have a high effect of blocking radiant heat. Further, in a case where an inorganic particle having a large diameter and an inorganic particle having a small diameter are used, the inorganic particle having a small diameter enters the gaps between the inorganic particles having a large diameter, and thus a denser structure is formed, which makes it possible to improve the effect of suppressing heat transfer. As a result, in a case where, for example, nanoparticles are used as the first inorganic particles, further, it is preferable that the heat transfer suppression sheet further contains, as the second inorganic particles, particles composed of a metal oxide having a diameter larger than the diameter of the first inorganic particles.

Examples of the metal oxide include silicon oxide, titanium oxide, aluminum oxide, barium titanate, zinc oxide, zircon, and zirconium oxide. In particular, titanium oxide (titania) is a component having a high refractive index as compared with other metal oxides, and the effect of subjecting light to irregular reflection and blocking radiant heat is high in a high temperature range of 500°C or higher. Therefore, it is most preferable to use titania.

In a case where at least one kind of particle selected from a dry type silica particle and a silica aerogel is used as the first inorganic particle and at least one kind of particle selected from titania, zircon, zirconia, silicon carbide, zinc oxide, and alumina is used as the second inorganic particle, in order to obtain excellent heat insulating performance in a temperature range of 300°C or lower, the first inorganic particle is preferably 50% by mass or more, more preferably 60% by mass or more, and still more preferably 70% by mass or more with respect to the total mass of the inorganic particles. In addition, the content of the first inorganic particle is preferably 95% by mass or less, more preferably 90% by mass or less, and still more preferably 80% by mass or less with respect to the total mass of the inorganic particles.

On the other hand, in order to obtain excellent heat insulating performance in a temperature range exceeding 300°C, the content of the second inorganic particle is preferably 5% by mass or more, more preferably 10% by mass or more, and still more preferably 20% by mass or more with respect to the total mass of the inorganic particles. In addition, the content of the second inorganic particle is preferably 50% by mass or less, more preferably 40% by mass or less, and still more preferably 30% by mass or less with respect to the total mass of the inorganic particles.

### (Average primary particle diameter of second inorganic particles)

In a case where the heat transfer suppression sheet contains second inorganic particles composed of a metal oxide, it is possible to efficiently suppress radiative heat transfer in a high temperature range of 500°C or higher in a case where the average primary particle diameter of the second inorganic particles is 1 µm or more and 50 µm or less. The average primary particle diameter of the second inorganic particles is still more preferably 5 µm or more and 30 µm or less, and most preferably 10 µm or less.

### (Content of inorganic particle)

In the present embodiment, in a case where the total content of the inorganic particles 4 in the heat transfer suppression sheet 10 is appropriately controlled, the heat insulating properties of the heat transfer suppression sheet 10 can be sufficiently ensured.

The total content of the inorganic particles 4 is preferably 60% by mass or more and more preferably 70% by mass or more with respect to the total mass of the heat transfer suppression sheet 10. In addition, in a case where the total content of the inorganic particles 4 is excessively large, the content of the organic fiber is relatively reduced. Therefore, in order to sufficiently obtain the effect of reinforcing the skeleton and the effect of holding the inorganic particles, the total content of the inorganic particles 4 is preferably 95% by mass or less and more preferably 90% by mass or less with respect to the total mass of the heat transfer suppression sheet 10.

It is noted that the content of the inorganic particles 4 in the heat transfer suppression sheet 10 can be calculated, for example, by heating the heat transfer suppression sheet 10 at 800°C, decomposing the organic portion, and measuring the mass of the remaining portion.

The heat transfer suppression sheet 10 according to the present embodiment may contain, in addition to the organic fiber 1 and the inorganic particles 4, an organic fiber formed from an organic material different from the first organic material, an inorganic fiber, and the like. In a case where the heat transfer suppression sheet 10 contains an inorganic fiber, the inorganic fiber that is preferably contained in the present embodiment will be described below.

### <Inorganic fiber>

As the inorganic fiber, a single kind of inorganic fiber may be used, or two or more kinds of inorganic fibers may be used in combination. Examples of the inorganic fiber include ceramic-based fibers such as a silica fiber, an alumina fiber, an aluminosilicate fiber, a zirconia fiber, a carbon fiber, a soluble fiber, a refractory ceramic fiber, an aerogel composite material, a magnesium silicate fiber, an alkaline earth silicate fiber, a potassium titanate fiber, a silicon carbide fiber, and a potassium titanate whisker fiber, glass-based fibers such as a glass fiber, glass wool, and slag wool, rock wool, a basalt fiber, a mullite fiber, and a fiber based on a natural mineral such as wollastonite, as a mineral-based fiber other than those described above.

These inorganic fibers are preferable in terms of heat resistance, strength, availability, and the like. Among the inorganic fibers, a silica-alumina fiber, an alumina fiber, a silica fiber, a rock wool, an alkaline earth silicate fiber, or a glass fiber is particularly preferable from the viewpoint of handleability.

The cross-sectional shape of the inorganic fiber is not particularly limited, and examples thereof include a circular cross section, a flat cross section, a hollow cross section, a polygonal cross section, and a core cross section. Among these, a modified cross-sectional fiber having a hollow cross section, a flat cross section, or a polygonal cross section can be suitably used since the heat insulating properties are slightly improved.

The preferred lower limit of the average fiber length of the inorganic fiber is 0.1 mm, and the more preferred lower limit thereof is 0.5 mm. On the other hand, the preferred upper limit of the average fiber length of the inorganic fiber is 50 mm, and the more preferred upper limit thereof is 10 mm. In a case where the average fiber length of the inorganic fibers is less than 0.1 mm, the entanglement between the inorganic fibers is less likely to occur, and there is a concern that the mechanical strength of the heat transfer suppression sheet 10 may be reduced. On the other hand, in a case where the average fiber length thereof exceeds 50 mm, although a reinforcing effect can be obtained, the inorganic fibers may not be able to be closely entangled with each other, or a single inorganic fiber is individually curled. As a result, continuous voids are likely to be generated, which may lead to a decrease in heat insulating properties.

The preferred lower limit of the average fiber diameter of the inorganic fiber is 1 µm, the more preferred lower limit thereof is 2 µm, and the still more preferred lower limit thereof is 3 µm. On the other hand, the preferred upper limit of the average fiber diameter of the inorganic fiber is 15 µm, and the more preferred upper limit thereof is 10 µm. In a case where the average fiber diameter of the inorganic fiber is less than 1 µm, there is a concern that the mechanical strength of the inorganic fiber itself may be reduced. In addition, from the viewpoint of the influence on the health of the human body, the average fiber diameter of the inorganic fiber is preferably 3 µm or more. On the other hand, in a case where the average fiber diameter of the inorganic fiber is more than 15 µm, there is a concern that solid heat transfer using the inorganic fiber as a medium may increase, which may cause a decrease in heat insulating properties, and in addition, there is a concern that the moldability and strength of the heat transfer suppression sheet may deteriorate.

### (Content of inorganic fiber)

In the present embodiment, in a case where the heat transfer suppression sheet 10 contains inorganic fibers, the content of the inorganic fibers is preferably 3% by mass or more and 15% by mass or less with respect to the total mass of the heat transfer suppression sheet 10.

In addition, the content of the inorganic fiber is more preferably 5% by mass or more and 10% by mass or less with respect to the total mass of the heat transfer suppression sheet 10. In a case of setting the content thereof to be such a content, the shape holding property or the resistance to the pressing force due to the inorganic fiber, the wind resistance, and the holding capacity of the inorganic particles are exhibited in a well-balanced manner. In addition, in a case of appropriately controlling the content of the inorganic fiber, the organic fiber 1 and the inorganic fiber are entangled with each other to form a three-dimensional network, and thus the effect of holding the inorganic particles 4 and other blending materials described later can be improved much further.

### <Other blending materials>

It is noted that the heat transfer suppression sheet according to the present embodiment can further contain a bonding material, a coloring agent, and the like, as necessary. All of these are useful for the reinforcement of the heat transfer suppression sheet, the improvement of moldability, and the like, and the total amount thereof with respect to the total mass of the heat transfer suppression sheet is preferably 10% by mass or less.

### [Manufacturing method for heat transfer suppression sheet]

An example of a manufacturing method of the heat transfer suppression sheet 10 according to the present embodiment will be described below.

For example, a binder fiber (not shown in the drawing) having a core-sheath structure and the inorganic particles 4 are charged into a mixer such as a V-type mixer at a predetermined ratio to produce a mixture.

It is noted that as described above, it is preferable to use, as the binder fiber, a fiber having a core-sheath structure that has a core portion composed of the first organic material and a sheath portion composed of the second organic material. In this case, a melting point of the first organic material is higher than a melting point of the second organic material.

Thereafter, the obtained mixture is charged into a predetermined mold and pressurized with a press machine or the like, and then the obtained molded body is heated, whereby the sheath portion of the binder fiber is melted. Thereafter, the heated molded body is cooled, whereby the binder fibers are fused to each other in a region in which the binder fibers are in contact with each other, a fused portion (base portion 2) is formed, and a branched structure having the base portion 2 and the branch portion 3 is formed. In addition, the melted second organic material constituting the sheath portion and the inorganic particles 4 present in a periphery of the binder fiber are fused to the surface of the binder fiber, that is, the surface of the organic fiber 1. In this manner, the heat transfer suppression sheet 10 processed into a sheet shape can be obtained.

It is noted that a part of the organic fibers 1 are entangled with each other in a case where the above-described materials are mixed, and thus in a case where this mixture is pressurized and heated, a plurality of entangled organic fibers 1 are formed into the fiber bundle 6. In addition, since the inorganic particles 4 are not likely to be filled between the plurality of organic fibers 1 constituting the fiber bundle 6, the void portion 8 is formed between the organic fibers 1.

In addition, even in a region in which a plurality of the organic fibers 1 that are entangled to each other are not present, the density of the inorganic particles 4 is increased in a case where the mixture is pressurized and heated. Therefore, in the obtained heat transfer suppression sheet 10, a plurality of empty holes 7 are formed in the gaps between the inorganic particles 4. The void portions 8 and the empty holes 7 make it possible to obtain the effect of suppressing heat transfer as described above.

Further, in a case where the above-described materials are mixed, and then the mixed materials are pressurized and heated, the entangled organic fibers 1 exposed on the surface are heated and formed as the fiber layer 11 on the surface of the heat transfer suppression sheet 10. It is noted that similar to the fiber bundle 6, the fiber layer 11 has an effect of improving the strength of the heat transfer suppression sheet 10 and also alleviating the impact on the surface of the heat transfer suppression sheet 10.

In the present embodiment, it is preferable that the heat transfer suppression sheet 10 is manufactured according to a dry type method. In a case where the dry type method is used, inorganic particles 4 suitable for the dry type method are used, and a solvent such as water, which is necessary for molding according to a wet type method, is not added to the mixture. However, in order to prevent a powder such as the inorganic particles 4 from being scattered during the manufacturing of the heat transfer suppression sheet 10 and the handling of the raw materials from being difficult, a small amount of a solvent such as water can also be added within a range that is allowed by the dry type method. For example, by adding a small amount of a solvent such as water to the mixture, it is possible to suppress the scattering of the inorganic particles during the manufacturing.

According to the manufacturing method according to the present embodiment, the melting point of the first organic material constituting the core portion is higher than the melting point of the second organic material constituting the sheath portion. Therefore, the sheath portion can be melted while leaving the core portion unmelted in a case where the mixture is heated. Then, after cooling, the outer peripheral surface of the core portion is covered with the second organic material containing the inorganic particles 4, and thus the inorganic particles 4 can be held. Since the organic fiber 1 to which the inorganic particles 4 have been fused has an apparently thick fiber diameter, the strength of the organic fiber 1 to which the inorganic particles 4 have fused is higher than the strength of only the organic fiber 1. Further, the binder fibers are present in an irregular direction in the mixture. Therefore, in a region in which a part of the binder fibers are in contact with each other, a part of the binder fibers are fused with each other, and a three-dimensional skeleton having the base portion 2 and the branch portion 3 is formed. As a result, the shape of the entire heat transfer suppression sheet can be maintained to have a much higher strength.

It is noted that even in a case where an organic fiber having no core-sheath structure is used as the binder fiber, depending on the temperature setting, the surface of the binder fiber can be melted while leaving the central part thereof unmelted, whereby the surface of the binder fiber can be adsorbed with inorganic particles, or the organic fibers can be fused to each other to form a branched structure. However, in a case of manufacturing the heat transfer suppression sheet, it is general to carry out heating from one side or both sides orthogonal to the thickness direction, and a material having high heat insulating performance is used. Therefore, strict temperature control is required in order to raise the temperature on the surface side of the sheet and the center side in the thickness direction to the same level.

On the other hand, in a case where a binder fiber having a core-sheath structure in which the melting point of the first organic material constituting the core portion is higher than the melting point of the second organic material constituting the sheath portion is used, it is possible to set the temperature for leaving very easily the core portion and melting the sheath portion. As a result, in the obtained heat transfer suppression sheet, the binder fibers are fused to each other to form a fused portion on both the surface side and the center side, and the organic fiber 1 having a branched structure having the base portion 2 and the branch portion 3 is formed. Then, the organic fiber 1 serves as a skeleton composed of a large base portion 2 and a plurality of branch portions 3 extending from the base portion 2, and thus the organic fiber 1 has a firm structure. As a result, it is preferable to use a binder fiber having such a core-sheath structure as described above, as the material of the heat transfer suppression sheet 10.

It is noted that, although details will be described later, an adhesive such as a hot melt powder may be contained in the mixture as a raw material of the heat transfer suppression sheet. In a case of appropriately adjusting the kind and content of the adhesive to be contained in the mixture, a skeleton formed from the organic fiber 1 is sufficiently fixed, and the holding power for the inorganic particles 4 is also improved, which makes it possible to suppress powder falling much further.

As a result, the heat transfer suppression sheet 10 manufactured by the manufacturing method according to the present embodiment has a more firm skeleton. Therefore, even in a case where a pressing force or an impact is applied to the heat transfer suppression sheet, the shape thereof can be maintained, and powder falling can be suppressed, and excellent heat insulating performance can be also maintained.

It is noted that in order to suppress powder falling much further, the surface of the heat transfer suppression sheet 10 may be covered with a film or the like. Examples of the polymer film include films composed of polyimide, polycarbonate, PET, p-phenylene sulfide, polyetherimide, a crosslinked polyethylene, a flame retardant chloroprene rubber, polyvinylidene fluoride, a rigid polyvinyl chloride, polybutylene terephthalate, PTFE, PFA, FEP, ETFE, rigid PCV, flame retardant PET, polystyrene, polyether sulfone, polyamide imide, polyacrylonitrile, polyethylene, polypropylene, polyamide, and the like. It is noted that a method of covering the surface of the heat transfer suppression sheet 10 with a film is not particularly limited, and examples thereof include a method of attaching the heat transfer suppression sheet 10 with an adhesive or the like, a method of wrapping the heat transfer suppression sheet 10 with a film, and a method of accommodating the heat transfer suppression sheet 10 in a bag-shaped film.

Next, a description will be made regarding the binder fiber and the heating conditions, which are preferably used in the manufacturing method for the heat transfer suppression sheet according to the present embodiment.

### <Binder fiber>

In the present embodiment, in a case where a binder fiber having a core-sheath structure is used, is not particularly limited as long as it is a binder fiber in which the melting point of the first organic material constituting the core portion is higher than the melting point of the second organic material constituting the sheath portion. As the first organic material serving as the core portion, at least one selected from polyethylene terephthalate, polypropylene, and nylon can be selected. In addition, as the second organic material serving as the sheath portion, at least one selected from polyethylene terephthalate, polyethylene, polypropylene, and nylon can be selected.

In a case where the melting point of the first organic material constituting the core portion is sufficiently higher than the melting point of the second organic material constituting the sheath portion, it is possible to widen a setting margin of the heating temperature in a step of carrying out heating, and it is possible to easily set the temperature for obtaining a much more desired structure. For example, the melting point of the first organic material is preferably higher than the melting point of the second organic material by 60°C or more, more preferably higher than the melting point of the second organic material by 70°C or more, and still more preferably higher than the melting point of the second organic material by 80°C or more.

It is noted that a binder fiber having such a core-sheath structure as described above is generally commercially available, and the materials constituting the core portion and the sheath portion, respectively, may be the same or different from each other. Examples of binder fiber in which the core portion and the sheath portion are composed of the same material and have melting points different from each other include those in which the core portion and the sheath portion are composed of polyethylene terephthalate, those in which the core portion and the sheath portion are composed of polypropylene, and those in which the core portion and the sheath portion are composed of nylon. Examples of the binder fiber in which the core portion and the sheath portion are composed of materials different from each other include those in which the core portion is composed of polyethylene terephthalate and the sheath portion is composed of polyethylene, and those in which the core portion is composed of polypropylene and the sheath portion is composed of polyethylene.

In the present embodiment, the melting point of the second organic material constituting the sheath portion of the binder fiber indicates a melting temperature at which the second organic material starts to undergo melting and deformation; however, softening accompanied by a change in shape is also determined as one kind of melting and deformation. The melting point of the sheath portion of the binder fiber can be measured, for example, by the following method.

A binder fiber to be measured is disposed to be in contact with a glass fiber having a higher melting point and heated to, for example, 200°C at a temperature rising rate of 5 °C/min from room temperature, and then cooled to room temperature. In this case, in a case where the surface of the binder fiber undergoes melting and deformation, thereby being fused in a portion that is in contact with the glass fiber, or in a case where the cross-sectional shape of the binder fiber is changed, it can be determined that the melting point of the second organic material constituting the sheath portion is 200°C or lower. In the present embodiment, the melting point of the second organic material constituting the sheath portion can be specified by observing the fused state between the binder fiber and the glass fiber after cooling by the above-described method or the cross-sectional shape of the binder fiber while changing the heating temperature to various temperatures.

### (Content of binder fiber)

In the present embodiment, in a case where a binder fiber having a core-sheath structure is used as the material, it is possible to sufficiently obtain the effect of reinforcing the skeleton in the obtained heat transfer suppression sheet 10 in a case where the content of the binder fiber in the mixture is appropriately controlled.

The content of the binder fiber is preferably 5% by mass or more and more preferably 10% by mass or more with respect to the total mass of the mixture. In addition, in a case where the content of the binder fiber is too large, the content of the inorganic particles 4 is relatively reduced. Therefore, in order to obtain the desired heat insulating performance, the content of the binder fiber is preferably 25% by mass or less and more preferably 20% by mass or less with respect to the total mass of the mixture.

### <Hot melt powder>

In the present embodiment, the mixture may contain a hot melt powder in addition to the binder fiber and the inorganic particles 4. The hot melt powder is, for example, a powder that contains a third organic material different from the first organic material and the second organic material and has a property of being melted by heating. In a case where the hot melt powder is contained in the mixture and heated, the hot melt powder is melted, and then in a case where the mixture is cooled, the mixture is cured in a state of containing the inorganic particles 4 in the periphery. As a result, the falling off of the inorganic particles 4 from the heat transfer suppression sheet 10 can be suppressed much further.

Examples of the hot melt powder include those having various melting points. However, a hot melt powder having an appropriate melting point may be selected in consideration of the melting points of the core portion and the sheath portion of the binder fiber to be used. Specifically, in a case where the third organic material, which is a component constituting the hot melt powder, has a melting point lower than the melting point of the first organic material constituting the organic fiber, it is possible to set the heating temperature for melting the sheath portion and the hot melt powder while leaving the core portion unmelted. For example, in a case where the melting point of the hot melt powder is equal to or lower than the melting point of the sheath portion, the heating temperature during manufacturing needs only to be set between the melting point of the core portion and the melting point of the sheath portion, and thus the heating temperature can be set much more easily.

On the other hand, the kind of hot melt powder to be used can also be selected so that the melting point of the hot melt powder is between the melting point of the core portion and the melting point of the sheath portion. In a case where a hot melt powder having such a melting point is used, the hot melt powder, which is present in the organic fiber (core portion) 1 and the melted sheath portion in a periphery of the organic fiber (core portion) 1, and the gap between the inorganic particles 4, is cured in advance after both the sheath portion and the hot melt powder are melted and then cooled to be cured. As a result, the positions of the organic fiber 1 can be fixed, and then, the melted sheath portion is fused to the organic fiber, whereby a three-dimensional skeleton is easily formed. As a result, the strength of the entire sheet can be improved much further.

In a case where the melting point of the third organic material constituting the hot melt powder is sufficiently lower than the melting point of the first organic material constituting the core portion, it is possible to widen a setting margin of the heating temperature in a step of carrying out heating, and it is possible to easily set the temperature for obtaining a much more desired structure. For example, the melting point of the first organic material is preferably higher than the melting point of the third organic material by 60°C or more, more preferably higher than the melting point of the third organic material by 70°C or more, and still more preferably higher than the melting point of the third organic material by 80°C or more.

It is noted that the melting point of the hot melt powder (third organic material) is preferably 80°C or higher and more preferably 90°C or higher. In addition, the melting point of the hot melt powder (third organic material) is preferably 180°C or lower and more preferably 150°C or lower. Examples of the component constituting the hot melt powder include polyethylene, polyester, polyamide, and vinyl acetate.

### (Content of hot melt powder)

In a case where the mixture contains hot melt powder in order to suppress the falling off of the inorganic particles, an effect of suppressing powder falling can be obtained even in a case where the content of the hot melt powder is small. As a result, the content of the hot melt powder is preferably 0.5% by mass or more and more preferably 1% by mass or more with respect to the total mass of the mixture.

On the other hand, in a case where the content of the hot melt powder is increased, the content of the inorganic particles 4 and the like is relatively decreased. Therefore, in order to obtain the desired heat insulating performance, the content of the hot melt powder is preferably 5% by mass or less and more preferably 4% by mass or less with respect to the total mass of the mixture.

### <Heating conditions>

Examples of the step of processing the mixture into a sheet shape include a step of pressurizing the mixture and a step of heating the mixture. In a case where a binder fiber having a core-sheath structure is used as the material of the heat transfer suppression sheet 10, it is preferable that the heating temperature in a step of carrying out heating is set to be higher than the melting point of the second organic material constituting the sheath portion and lower than the melting point of the first organic material constituting the core portion. In a case where the heating temperature is set to such a heating temperature, described above, the organic fiber 1 having a branched structure containing the base portion 2 and the branch portion 3 is formed even on both the surface side and the center side of the sheet, and the strength of the sheet can be ensured, and the inorganic particles 4 can be also held by the branch portion 3.

Specifically, the heating temperature in a step of carrying out heating is preferably set to be higher than the melting point of the second organic material constituting the sheath portion by 10°C or more, and more preferably set to be higher than the melting point of the second organic material constituting the sheath portion by 20°C or more. On the other hand, the heating temperature is preferably set to be lower than the melting point of the first organic fiber constituting the core portion by 10°C or more, and more preferably set to be lower than the melting point of the first organic fiber constituting the core portion by 20°C or more.

The heating time is not particularly limited; however, it is preferable to set the heating time for sufficiently melting the sheath portion. For example, the heating time can be set to 3 minutes or more and 15 minutes or less.

In a case where the hot melt powder is contained as the material of the heat transfer suppression sheet, the heating temperature in a step of carrying out heating is preferably set to be higher than any higher one of the melting point of the second organic material constituting the sheath portion or the melting point of the third organic material constituting the hot melt powder by 10°C or more, and more preferably set to be higher than any higher one of the melting point of the second organic material constituting the sheath portion or the melting point of the third organic material constituting the hot melt powder by 20°C or more. On the other hand, the heating temperature is preferably set to be lower than the melting point of the first organic material constituting the core portion by 10°C or more, and more preferably set to be lower than the melting point of the first organic material constituting the core portion by 20°C or more. In a case where the heating temperature is set to such a heating temperature described above, a firm skeleton can be formed, and as a result, it is possible to improve the strength of the sheet much further, and it is also possible to prevent the inorganic particles 4 from falling off by the branch portion 3 or the like.

### <Thickness of heat transfer suppression sheet>

The thickness of the heat transfer suppression sheet according to the present embodiment is not particularly limited; however, it is preferably 0.05 mm or more and 10 mm or less. In a case where the thickness is 0.05 mm or more, a sufficient compressive strength can be obtained. On the other hand, in a case where the thickness is 10 mm or less, it is possible to obtain good heat insulating properties of the heat transfer suppression sheet.

### [Battery pack]

An example of a battery pack to which the heat transfer suppression sheet 10 according to the embodiment of the present invention is applied is as illustrated in Fig. 4. Here, the configuration and the effect of the battery pack will be specifically described with reference to Fig. 4.

As shown in Fig. 4, the battery pack 100 has a plurality of battery cells 20a, 20b, and 20c and the heat transfer suppression sheet according to the present embodiment, and the plurality of battery cells are connected in series or in parallel.

For example, as shown in Fig. 4, the heat transfer suppression sheet 10 according to the present embodiment is interposed between the battery cell 20a and the battery cell 20b and between the battery cell 20b and the battery cell 20c. Further, the battery cells 20a, 20b, and 20c and the heat transfer suppression sheet 10 are accommodated in the battery case 30.

It is noted that the heat transfer suppression sheet 10 is as described above.

In the battery pack 100 configured as described above, since the heat transfer suppression sheet 10 having an effect of suppressing heat transfer is present between the battery cell 20a and the battery cell 20b, the propagation of heat to the battery cell 20b can be suppressed even in a case where a temperature of a certain battery cell 20a reaches a high temperature.

In addition, the heat transfer suppression sheet 10 according to the present embodiment has a high compressive strength. Therefore, even during charging and discharging of the battery cells 20a, 20b, and 20c, thermal expansion of the battery cells can be suppressed. As a result, it is possible to ensure the distance between the battery cells, it is possible to maintain excellent heat insulating performance, and it is possible to prevent thermal runaway of the battery cells. In addition, since an effect of suppressing powder falling is provided, the handling can be easily carried out.

It is noted that the battery pack 100 according to the present embodiment is not limited to the battery pack illustrated in Fig. 4. For example, the heat transfer suppression sheet 10 may be disposed not only between the battery cell 20a and the battery cell 20b and between the battery cell 20b and the battery cell 20c, but also between battery cells 20a, 20b, 20c and the battery case 30, or may be attached to an inner surface of the battery case 30.

In the battery pack 100 configured as described above, it is possible to suppress the spread of the flame to the outside of the battery case 30 in a case where a certain battery cell ignites.

For example, the battery pack 100 according to the present embodiment is used for an electric vehicle (EV) or the like and may be disposed under the floor of a passenger. In this case, it is possible to ensure the safety of the passenger even in a case where the battery cell ignites.

In addition, since the heat transfer suppression sheet 10 can be interposed not only between the respective battery cells but also disposed between the battery cells 20a, 20b, and 20c and the battery case 30, it is not necessary to newly produce a flame retardant material or the like, and thus a safe and low-cost battery pack 100 can be easily constituted.

In the battery pack according to the present embodiment, the heat transfer suppression sheet 10 disposed between the battery cells 20a, 20b, and 20c and the battery case 30, and the battery cells may be in contact with each other or may have a gap therebetween. However, in a case where there is a gap between the heat transfer suppression sheet 10 and the battery cells 20a, 20b, and 20c, the deformation of the battery cell can be allowed even in a case where the temperature of any of the plurality of battery cells rises and the volume thereof expands.

It is noted that the heat transfer suppression sheet 10 according to the present embodiment can be produced in various shapes by the manufacturing method therefor. As a result, it can be adapted to any shape without being affected by the shapes of the battery cells 20a, 20b, and 20c and the battery case 30. Specifically, it can be applied to not only a rectangular battery but also a cylindrical battery, a flat battery, and the like.

As described above, various embodiments have been described above. However, it goes without saying that the present invention is not limited to such examples. It is obvious to those skilled in the art that various changes or modifications can be made within the scope described in the claims, and it is understood that those various changes or modifications naturally belong to the technical scope of the present invention. In addition, each constitutional component in the above embodiment may be randomly combined without departing from the spirit of the invention.

This application is based on a Japanese patent application filed on May 27, 2022 (Japanese Patent Application No. 2022-086811), the contents of which are incorporated herein by reference.

### REFERENCE SIGNS LIST

1: organic fiber
2: base portion
3: branch portion
6: fiber bundle
7: empty hole
8: void portion
10: heat transfer suppression sheet
11: fiber layer
12: composite layer
13: base layer
20a, 20b, 20c: battery cell
30: battery case
100: battery pack

## Claims

1. A heat transfer suppression sheet comprising:
inorganic particles; and
an organic fiber,
wherein at least a part of the organic fiber has a branched structure comprising a base portion and branch portions extending from the base portion in at least three directions.

2. The heat transfer suppression sheet according to claim 1, wherein the base portion is a fused portion in which a plurality of the organic fibers are fused with each other.

3. The heat transfer suppression sheet according to claim 1, wherein the heat transfer suppression sheet has a plurality of empty holes.

4. The heat transfer suppression sheet according to claim 1, wherein the heat transfer suppression sheet has a fiber bundle that is obtained by fusing at least a part of a plurality of the organic fibers to each other.

5. The heat transfer suppression sheet according to claim 4, wherein the heat transfer suppression sheet has a void portion between a plurality of the organic fibers constituting the fiber bundle.

6. The heat transfer suppression sheet according to claim 1, wherein the heat transfer suppression sheet has a fiber layer that is obtained by fusing at least a part of a plurality of the organic fibers to each other on at least a part of a first surface and a second surface, each of which is orthogonal to a thickness direction of the heat transfer suppression sheet.

7. The heat transfer suppression sheet according to claim 6, wherein between the fiber layer and a base layer containing the inorganic particles and the organic fibers, the heat transfer suppression sheet has a composite layer containing a plurality of the organic fibers, at least a part of which are fused to each other, and the inorganic particles fused to the organic fibers.

8. The heat transfer suppression sheet according to claim 1, wherein at least a part of the inorganic particles are fused to the organic fiber.

9. The heat transfer suppression sheet according to claim 2, wherein the organic fiber has a core portion composed of a first organic material and a sheath portion composed of a second organic material and covering at least a part of a surface of the core portion,
a melting point of the second organic material is lower than a melting point of the first organic material, and
the fused portion contains the second organic material.

10. The heat transfer suppression sheet according to claim 9, wherein the melting point of the second organic material is lower than the melting point of the first organic material by 60°C or more.

11. The heat transfer suppression sheet according to claim 9, wherein the first organic material is at least one selected from polyethylene terephthalate, polypropylene, and nylon, and
the second organic material is at least one selected from polyethylene terephthalate, polyethylene, polypropylene, and nylon.

12. The heat transfer suppression sheet according to claim 1, wherein the inorganic particle is at least one kind of an inorganic material particle selected from an oxide particle, a carbide particle, a nitride particle, or an inorganic hydrate particle.

13. The heat transfer suppression sheet according to claim 12, wherein the inorganic particles comprise at least one kind of particle selected from a dry type silica particle and a silica aerogel.

14. The heat transfer suppression sheet according to claim 13, wherein the inorganic particles further comprise at least one kind of particle selected from titania, zircon, zirconia, silicon carbide, zinc oxide, and alumina.

15. A battery pack comprising:
a plurality of battery cells; and
the heat transfer suppression sheet according to any one of claims 1 to 14,
wherein the plurality of battery cells are connected in series or in parallel.
